# EUROPÄISCHE PATENTSCHRIFT

(11) **EP 3 628 464 B1**
(45) Veröffentlichungstag und Bekanntmachung des Hinweises auf die Patenterteilung: **18.03.2026**
(21) Anmeldenummer: 19177976.8
(22) Anmeldetag: 03.06.2019
(51) Int. Cl.: B29C 44/44, B29C 44/14, B29C 44/08, B29C 44/12, B29C 44/34

(54) **VERFAHREN ZUR HERSTELLUNG EINES FLÄCHENHAFT AUSGEBILDETEN BAUELEMENTES**
METHOD FOR PRODUCING A FLAT COMPONENT
PROCÉDÉ DE FABRICATION D'UN COMPOSANT PLAN

(30) Priorität: 26.09.2018 DE 102018123703
(43) Veröffentlichungstag der Anmeldung: 01.04.2020
(73) Patentinhaber: PARAT Technology Group GmbH., 94089 Neureichenau (DE)
(72) Erfinder: Prinz, Maximilian, 94036 Passau (DE); Schmid, Tobias, 94089 Neureichenau (DE)
(74) Vertreter: Roche, von Westernhagen & Ehresmann

(56) Entgegenhaltungen:
- EP-A1- 0 152 655
- EP-A2- 0 477 476
- DE-A1- 3 842 846
- JP-A- S59 201 826
- US-A1- 2006 105 650
- US-A1- 2017 334 106
- US-B1- 6 261 489

## Beschreibung

Die Erfindung betrifft ein Verfahren zur Herstellung eines flächenhaft ausgebildeten Bauelementes in Sandwich-Leichtbauweise mit einer hochwertigen Oberfläche.

Derartige Verfahren werden von der Anmelderin seit Jahrzehnten entwickelt und in großem Umfange durchgeführt.

Lediglich beispielhaft wird verwiesen auf die folgenden deutschen Patentanmeldungen der Anmelderin:
DE 10 2018 117 337, DE 10 2017 109 953, DE 10 2016 112 290 A1, DE 10 2013 018 694 A1, DE 10 2013 008 592 A1, DE 10 2013 005 523 A1, DE 10 2013 008 364 A1, DE 10 2015 111 052 A1 sowie DE 10 2012 017 698 A1,
deren Inhalt hiermit in den Inhalt der vorliegenden Patentanmeldung zur Vermeidung von Wiederholungen miteingeschlossen wird.

Aus der US 2006/105650 A1 geht ein Verfahren hervor, bei dem eine dünne Haut in ein Werkzeug eingelegt wird, sodann Schaumpartikel in die Kavität der Form eingefüllt werden, und nachfolgend Dampf injiziert wird. Der Dampf wird mit einer bestimmten Temperatur und einem bestimmten Druck bereitgestellt. Infolge der Einleitung des heißen Dampfes werden die Polystyrolpartikel expandiert und versintern miteinander sowie mit der Oberfläche der Plastikhaut. Die Druckschrift zeigt kein Verfahren, bei dem bei geschlossenem Werkzeug das Werkzeug geheizt wird, um die Partikel endaufzuschäumen. Das Verfahren gemäß der Druckschrift erfordert den zwingenden Einsatz von Dampf. Auf den Einsatz von Dampf soll aber mit dem erfindungsgemäßen Verfahren gerade verzichtet werden.

Die von der Anmelderin bislang überwiegend angewandten Verfahren zur Herstellung eines solchen flächenhaft ausgebildeten Bauelementes umfassen insbesondere Verbindungen von thermoplastischen tiefgezogenen Folien mit Polyurethan-Schaummassen.

Hiervon ausgehend liegt der Erfindung die Aufgabe zugrunde, ein Verfahren anzugeben, mit dem ein flächenhaftes Bauelement gefertigt werden kann, welches den Anforderungen an ein geringes Gewicht und eine hohe Steifigkeit gerecht wird, und preisgünstig gefertigt werden kann.

Die Erfindung löst diese Aufgabe mit den Merkmalen des Anspruches 1.

Das Prinzip der Erfindung besteht zunächst darin, anstelle der bislang verwendeten Polyurethan-Zweikomponentenschäume einen expandierbaren Partikelschaum einzusetzen.

Als geeignete expandierbare Partikelschäume kommen beispielsweise Partikelschäume aus EPS, EPE und EPP infrage. Es handelt sich hier um Partikelschäume, die im voll oder endfertig ausgeschäumten und ausgehärteten Zustand Dichten im Bereich von typischerweise 15 kg/m³ bis 80 kg/m³ aufweisen können.

Gemäß der Erfindung wird zunächst ein folienartiges Substrat bereitgestellt. Es kann sich dabei beispielweise um eine tiefziehbare Folie, z. B. aus ABS oder PMMA handeln. Diese kann beispielsweise eine Wandstärke zwischen 0,2 und 13 mm aufweisen. Die Folie kann beispielsweise in einem ersten Werkzeug tiefgezogen werden. Das verwendete Substrat kann aber auch von einer dünnen Haut, einer dünnen Folie, oder einem anderen flächenhaften Material bereitgestellt sein. Das Substrat muss nicht tiefgezogen sein.

Gemäß der Erfindung wird das Substrat in einem Unterwerkzeug angeordnet. Das Unterwerkzeug weist dabei insbesondere einen Aufnahmeraum für Partikel auf, was später noch detaillierter erläutert wird.

Das erfindungsgemäße Verfahren sieht nun vor, dass granulares Ausgangsmaterial in Form von losen Partikeln eines aufschäumbaren Partikelschaums bereitgestellt wird. Infrage kommen also solche Materialien, die als expandierbare Partikelschäume bekannt sind. Insbesondere versteht man hierunter expandierbare Partikelschäume aus EPS, EPE, oder EPP, oder auch expandierbares PEEK. Eine weitere Definition erfolgt weiter unten.

Das granulare Ausgangsmaterial kann in der verwendeten Form von kleinen Kügelchen oder Perlen, oder in Form von granularen Partikeln anderer regelmäßiger oder auch unregelmäßiger Form und Geometrie bereitgestellt werden. Das Ausgangsmaterial ist insbesondere schüttbar.

Die Partikel sind in dem granularen Ausgangsmaterial lose vorhanden, d. h. insbesondere noch nicht fest miteinander verbunden.

Gemäß der Erfindung erfolgt nun der Schritt eines teilweisen Aufschäumens der Partikel. Das teilweise Aufschäumen bedeutet, dass die Partikel noch nicht vollständig aufgeschäumt werden. Beispielsweise kann gemäß der Erfindung vorgesehen sein, dass bezogen auf einen Aufschäum- oder Expansionsvorgang von 0 bis 100% ausgehend vom Volumen der Partikel des Ausgangsmaterials bis zu dem Volumen der Partikel im endfertig geschäumten Zustand, ein teilweises Aufschäumen zwischen 30 und 95% stattfindet. Der Begriff teilweises Aufschäumen umfasst insbesondere Ausführungsbeispiele der Erfindung, bei denen zumindest der Schritt eines zusätzlichen Aufschäumens der Partikel noch durchgeführt werden kann, hin zu einem endaufgeschäumten Zustand der Partikel.

Der Schritt des teilweisen Aufschäumens erfolgt insbesondere - aber nicht zwingend - an einem Ort, der sich entfernt von dem Unterwerkzeug befindet, in dem das Substrat angeordnet ist. Weiter vorteilhafterweise kann das teilweise Aufschäumen der Partikel in einem Ofen, insbesondere in einem Infrarot-Backofen, durchgeführt werden.

Gemäß einem weiteren Schritt des erfindungsgemäßen Verfahrens ist vorgesehen, dass die teilweise aufgeschäumten Partikel in das Unterwerkzeug verbracht werden. Der Transport der teilweise aufgeschäumten Partikel kann beispielsweise zeitlich unmittelbar nach der Durchführung des Schrittes des teilweisen Aufschäumens der Partikel durchgeführt werden. Er kann aber auch zeitlich deutlich später nach Durchführung des Schrittes des teilweisen Aufschäumens der Partikel durchgeführt werden.

Ein Verbringen und/oder ein Anordnen oder Positionieren der teilweise aufgeschäumten Partikel in das Unterwerkzeug kann maschinell, automatisiert, oder händisch erfolgen.

Gemäß der Erfindung wird nun das Werkzeug geschlossen. Hierzu kann beispielsweise ein Oberwerkzeug gegen das Unterwerkzeug fahren und einen Aufnahmeraum oder Unterbringungsraum für die teilweise aufgeschäumten Partikel - sowie für das in dem Unterwerkzeug befindliche Substrat - verschließen.

Gemäß der Erfindung wird des weiteren das Werkzeug geheizt. Von der Erfindung ist auch umfasst, wenn das Werkzeug ständig bei einer konstanten Temperatur oder bei einer Temperatur innerhalb eines vorgegebenen Temperaturbereichs gehalten wird.

Gemäß der Erfindung erfolgt sodann ein Endaufschäumen der zuvor bereits teilweise aufgeschäumten Partikel zu einem vollständig aufgeschäumten Partikelschaum. Die Partikel dehnen sich nun auf ihren maximalen Umfang bzw. auf ihr maximales Volumen aus, und verbacken oder versintern sozusagen miteinander. Dabei verbindet sich die Partikelschaummasse zugleich mit dem Substrat. Die Aktivierung des Rest- Aufschäumvorgangs erfolgt über die Werkzeugtemperatur. Von der Erfindung ist auch umfasst, wenn zusätzlich oder alternativ andere Aktivierungsmittel zur Aktivierung und zur Durchführung des Rest-Aufschäumvorgangs der Partikel, also für den Aufschäumvorgang der bereits teilweise aufgeschäumten Partikel bis hin zu einem endaufgeschäumten Zustand der Partikel, verwendet werden.

Gemäß der Erfindung erfolgt sodann ein Aushärtenlassen der Partikelschaummasse. Infolge dieses Aushärtevorgangs geht die Partikelschaummasse mit dem Substrat eine dauerhafte feste Verbindung ein.

Von der Erfindung ist auch umfasst, wenn das Substrat auf seiner der Partikelschaummasse zugewandten Innenseite vor dem Verbringen der teilweise aufgeschäumten Partikel in das Unterwerkzeug mit einer entsprechenden Chemikalie, z. B. nach Art eines Haftgrundes, versehen wird, um die Verbindung zwischen dem Substrat und der Partikelschaummasse bzw. das Eingehen der Verbindung zwischen dem Substrat und der Partikelschaummasse zu optimieren.

Nach dem Aushärtenlassen der Partikelschaummasse kann das Werkzeug geöffnet und der so gebildete Formling entnommen werden. Der so gebildete Formling stellt das erfindungsgemäß zu fertigende Bauelement dar, oder kann durch nachfolgende Bearbeitungsschritte zu einem solchen Bauelement heranreifen.

Definition expandierbarer Partikelschaum:
Als expandierbare Partikelschäume im Sinne der vorliegenden Patentanmeldung werden beispielsweise folgende Materialien angesehen:
Unter der Abkürzung EPS wird expandierbares Polystyrol bezeichnet. Dieses ist beispielsweise unter der Markenbezeichnung Styropor bekannt, und kann z. B. von der Firma Metz EPS-Hartschaumzuschnitte in 74376 Gemmrigheim bezogen werden.

Als Partikelschaum im Sinne der vorliegenden Patentanmeldung werden auch expandierbare Polyethylene (EPE) angesehen. Schließlich werden auch expandierbare Polypropylene (EPP) für die erfindungsgemäßen Zwecke als gut geeignet angesehen.

Insbesondere sind von dem Begriff Partikelschaum im Sinne der vorliegenden Patentanmeldung thermoplastische Partikelschäume umfasst. Diese können als Ausgangsmaterial Granulat, insbesondere auch Microgranulat, beispielsweise mit Durchmessern der Partikel in der Größenordnung von zwischen 0,1 und 5 mm aufweisen, weiter vorzugsweise Partikel mit einem Durchmesser von ca. 1mm.

In den granularen Ausgangsmaterial-Partikeln des Partikelschaums sind vorzugsweise Treibmittel angeordnet. Diese können thermisch und/oder durch Chemikalien, beispielsweise auch durch Einwirkung von Wasserdampf, aktiviert werden, um den Vorschäumprozess auszulösen.

Der Vorgang des Restaufschäumens, also des Endaufschäumens bereits vorgeschäumter Partikel hin zu endaufgeschäumten Partikeln, wird im Sinne der vorliegenden Patentanmeldung auch als Versintern bezeichnet.

Als Treibmittel kommt für Polystyrol-Partikelschaum-Partikel beispielsweise Pentan in Betracht, das in die granularen Partikel einpolymerisiert ist. Sobald die Partikel Temperaturen von über 100° ausgesetzt werden, kann das Treibmittel verdämpfen und bläht dabei das thermoplastische Grundmaterial zu Polystyrol-Schaumpartikeln auf.

Die zweite Aufschäumstufe kann erfindungsgemäß im Unterwerkzeug erfolgen, wobei die Werkzeugtemperatur so gewählt wird, dass das Treibmittel endausdampfen kann, und den Partikel endausschäumen kann.

Neben EPS (extrudierbares Polystyrol) kommt für die Erfindung auch XPS in Betracht.

Als Bezugsquelle für expandierbares Polypropylen EPP bzw. XPS kommt beispielsweise die Firma Schaumaplast GmbH & Co. KG in 68799 Reilingen in Betracht.

Partikelschäume zum Einsatz mit der Erfindung können auch von expandierbaren Co-Polymeren bereitgestellt werden. Derartige Materialien sind beispielsweise unter dem Handelsnamen Grupor von dem Kunststoffwerk Katzbach GmbH & Co. KG in 93413 Cham beziehbar.

Als Ausgangsmaterial des im Rahmen der Erfindung einsetzbaren Partikelschaums kommt auch expandierbares PEEK (Polyetheretherketon) in Betracht. Dieses ist beispielsweise unter den Handelsnamen Gatone oder Victrex beziehbar.

Das erfindungsgemäße Verfahren dient zur Herstellung eines Bauelementes mit einer hochwertigen Oberfläche. Eine hochwertige Oberfläche kann beispielsweise besonders belastbar, z. B. in besonderem Maße schlagzäh ausgebildet sein, und weiter insbesondere für Außenanwendungen geeignet sein. Insbesondere kann eine hochwertige Oberfläche Eigenschaften aufweisen, wie sich bei sogenannten Class-A-Oberflächen gefordert sind.

Die Erfindung bezieht sich auf ein Verfahren zur Herstellung eines flächenhaft ausgebildeten Bauelementes. Der Begriff flächenhaft bedeutet, dass sich das Bauelement entlang einer Fläche in x- und y-Richtung erheblich länger erstreckt, als in einer senkrecht dazu stehenden z-Richtung. Die Fläche kann eben oder im Raum gekrümmt, auch mehrfach gekrümmt, ausgebildet sein, und jegliche beliebige Raumform einnehmen.

Gemäß einer vorteilhaften Ausgestaltung der Erfindung ist das Substrat von einer tiefgezogenen Folie bereitgestellt. Dies ermöglicht einen Rückgriff auf herkömmliche Bestandteile eines Bauelementes, die bereits umfangreich erprobt sind, und in besonderen Maße die Bereitstellung einer hochwertigen Oberfläche für das Bauteil ermöglichen.

Gemäß einer weiteren vorteilhaften Ausgestaltung der Erfindung ist die Durchführung des Schrittes k) vorgesehen: Anbringen einer Deckschicht an der dem Substrat abgewandten Seite der Partikelschaummasse. Eine solche Deckschicht kann beispielsweise eine Innendekorschicht, beispielsweise eine Wandtäfelung, insbesondere eine Kunststoffschicht sein. Für den Fall, dass das gefertigte Bauelement z. B. eine Wand oder einen Wandungsabschnitt eines Caravans oder eines Caravan-Anhängers ausbildet, kann die Dekorschicht z. B. eine typische Innenausstattungsfläche eines solchen Caravans nach herkömmlicher Art und Weise sein.

Gemäß einer weiteren vorteilhaften Ausgestaltung der Erfindung umfasst das erfindungsgemäße Verfahren den folgenden Schritt:
I) Bearbeiten des Formlings zu einem Bauelement.

Als Bearbeitungsschritte kommen diverse Bearbeitungsverfahren in Betracht. Hierzu gehört beispielsweise bedarfsweise ein Trennen oder Abtrennen von Teilen oder Bereichen des Formlings, ggf. auch ein Abtrennen oder Trennen von Abschnitten des Substrats. Hierzu gehört z. B. auch ein Schritt des Reinigens, und/oder ein Schritt einer Oberflächenbearbeitung, insbesondere an der Außenseite des Substrats, beispielsweise ein Aufrauen oder Polieren oder Glätten der Oberfläche, ggf. auch das Anbringen einer zusätzlichen Schicht oder Folie, beispielsweise einer zusätzlichen Funktionsschicht.

Von der Erfindung ist auch umfasst, wenn die dem Substrat abgewandte Seite der ausgehärteten Partikelschaummasse bearbeitet wird, beispielsweise mit einer zusätzlichen Haut oder einem zusätzlichen Material oder einer Folie verbunden oder beaufschlagt, z. B. besprüht, beklebt, lackiert, vernietet, verschraubt oder mit einem anderen Element verklebt wird.

Gemäß einer weiteren vorteilhaften Ausgestaltung der Erfindung weist die Folie eine Wandstärke zwischen 0,2 mm und 13 mm auf. Diese Ausführungsform der Erfindung erlaubt ebenfalls einen Rückgriff auf herkömmliche Folien, die bei zahlreichen Verbundwerkstoffen erprobt werden konnten, und deren Tiefzieheigenschaften und Oberflächeneigenschaften hinreichend bekannt und erforscht sind.

Gemäß einer weiteren vorteilhaften Ausgestaltung der Erfindung umfasst die ausgehärtete Partikelschaummasse eine Wandstärke zwischen 1 cm und 30 cm. In Abhängigkeit von den geforderten Festigkeiten des angefertigten Bauelementes wird die Wandstärke der ausgehärteten Partikelschaummasse berechnet und ausgelegt. Trotz der verhältnismäßig großen Wandstärken kann das endgefertigte Bauelement ein nur sehr geringes Gewicht aufweisen.

Gemäß einer weiteren vorteilhaften Ausgestaltung der Erfindung ist das Bauelement als ein Fahrzeugteil für ein Kfz, oder für ein Nutzfahrzeug, oder für ein Caravan-Fahrzeug ausgebildet, und ist beispielsweise ein Innenausstattungsteil, oder eine Laderaumabdeckung, oder ein Verkleidungsteil, oder eine Motorhaube, oder ein Dachelement, oder ein Dachsegment, oder eine Fahrzeugwand, oder ein Fahrzeugwandelement.

Gemäß einer weiteren vorteilhaften Ausgestaltung der Erfindung umfasst das granulare Ausgangsmaterial expandierbares EPS, expandierbares EPP oder expandierbares PEEK. Es handelt sich hier sämtlich um Materialien, die aufschäumbar, d. h. expandierbar sind, und die sich gemäß der Erfindung dazu eignen, zunächst nur teilweise aufgeschäumt oder expandiert zu werden, um nachfolgend noch einen Schritt der Endausschäumung oder Endexpansion in einem Werkzeug zu durchlaufen.

Gemäß einer weiteren vorteilhaften Ausgestaltung der Erfindung umfasst das Verfahren den Schritt m), der vor dem Schritt h) durchgeführt wird:
m) Positionieren von Verstärkungselementen, insbesondere nach Art von Zugankern, beispielweise nach Art von Tapes, in dem Unterwerkzeug, wobei nach dem Verbringen der teilweise aufgeschäumten Partikel in das Unterwerkzeug die Partikel die Verstärkungselemente umhüllen.

Gemäß dieser vorteilhaften Ausgestaltung der Erfindung wird die endaufgeschäumte, expandierte Partikelschaummasse durch Verstärkungselemente verstärkt oder versteift. Diese sind insbesondere so ausgebildet, dass sie Zugkräfte in einer Richtung quer zur flächenhaften Erstreckung des Bauelementes übertragen können. Hierdurch kann die Steifigkeit des Bauelementes erhöht werden. Von der Erfindung ist auch umfasst, wenn sich die Verstärkungselemente entlang der Erstreckungsrichtung des flächenhaft ausgebildeten Bauelementes erstrecken. Dabei können beispielsweise auch flächenhafte Gebilde wie Matten, Gelege, Gewirke etc. aus Verstärkungsfasern, beispielsweise aus Glasfasern, Carbonfasern, Aramidfasern, Basaltfasern oder anderen geeigneten Verstärkungsfasern, in das Unterwerkzeug vor dem Verfüllen in den Unterbringungsraum mit teilweise aufgeschäumten Partikel eingelegt werden.

Die Erfindung betrifft gemäß einem weiteren Aspekt ein flächenhaft ausgebildetes Bauelement nach Anspruch 10.

Der Erfindung liegt die Aufgabe zugrunde, ein Bauelement anzugeben, welches bei nur geringem Gewicht eine hohe Festigkeit und Tragfähigkeit aufweist, und preisgünstig fertigbar ist.

Die Erfindung löst diese Aufgabe mit den Merkmalen des Anspruches 10.

Zur Vermeidung von Wiederholungen wird bezüglich der Erklärung und Erläuterung der Merkmale des Anspruches 10 sowie zur Erläuterung der Erfindung nach Anspruch 10 auf die vorherigen Ausführungen zu den Ansprüchen 1 bis 9 in analoger Weise verwiesen.

Weitere Vorteile der Erfindung ergeben sich aus den nicht zitierten Unteransprüchen, sowie anhand der nachfolgenden Beschreibung der in den Zeichnungen dargestellten Ausführungsbeispiele. Darin zeigen:
- Fig. 1: in einer teilgeschnittenen schematischen Ansicht ein Ausführungsbeispiel eines Ofens, in welchen granulares Ausgangsmaterial in Form von Partikeln eines Partikelschaumes eingefüllt wird, wobei das granulare Ausgangsmaterial ungeschäumt ist,
- Fig. 2: den Ofen der Fig. 1 mit einer zusätzlich dargestellten Infrarot-Strahlungsheizung, wobei die zuvor eingefüllten Partikel in einen teilaufgeschäumten Zustand überführt worden sind,
- Fig. 3: ein erstes Werkzeug mit Unterwerkzeug und Oberwerkzeug und einer als Substrat ausgebildeten Folie in bahnförmigen, flachliegendem Zustand,
- Fig. 4: das geschlossene Werkzeug der Fig. 3 mit tiefgezogener Folie,
- Fig. 5: ein weiteres Werkzeug, in dem die tiefgezogene Folie der Fig. 4 positioniert ist, wobei in das Unterwerkzeug die teilweise aufgeschäumten Partikel des Partikelschaums gemäß Fig. 2 eingefüllt werden,
- Fig. 6: das Werkzeug der Fig. 5 mit zusätzlich dargestelltem Oberwerkzeug kurz vor dem vollständigen Schließen des Werkzeugs,
- Fig. 7: das Werkzeug der Fig. 6 in vollständig geschlossenem Zustand, wobei zusätzlich eine Heizeinrichtung für das Werkzeug dargestellt ist,
- Fig. 8: das Werkzeug der Fig. 7 in geöffnetem Zustand bei endaufgeschäumter ausgehärteter Partikelschaummasse,
- Fig. 9: den aus dem Werkzeug der Fig. 8 entnommenen Formling unter Andeutung von Trennlinien, entlang derer Überstandsbereiche des Substrats getrennt werden,
- Fig. 10: ein weiteres Ausführungsbeispiel eines Formlings bzw. eines nach dem erfindungsgemäßen Verfahren gebildeten erfindungsgemäßen Bauelementes mit einer zusätzlichen Schicht auf der dem Substrat abgewandten Seite der ausgehärteten Partikelschaummasse, und
- Fig. 11: ein weiteres Ausführungsbeispiel eines erfindungsgemäßen Bauelementes in einer Darstellung gemäß Fig. 10, wobei lediglich zu Illustrationszwecken die Porenstruktur des ausgehärteten Partikelschaumes in einer gegenüber Fig. 10 geänderten Weise dargestellt ist.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

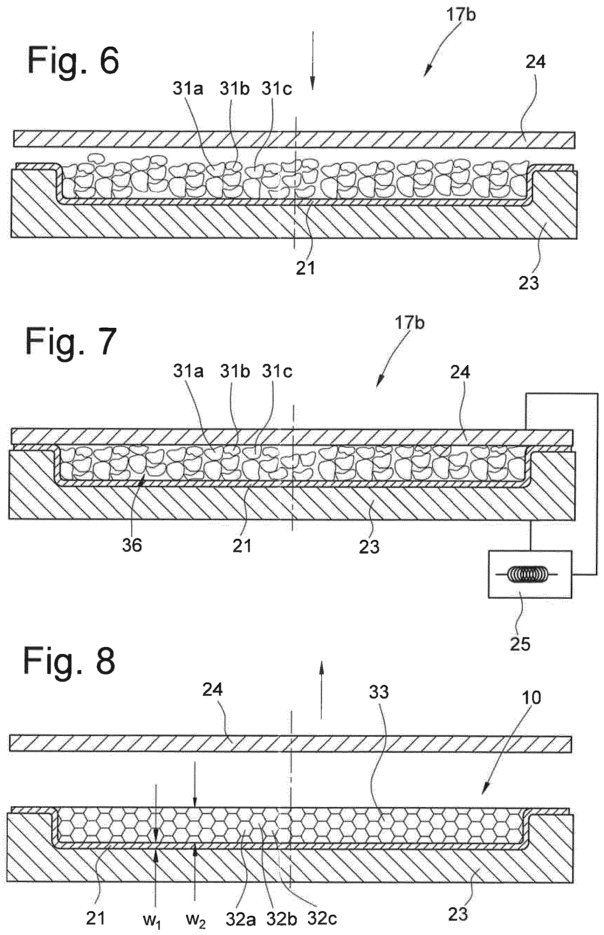

Ausführungsbeispiele von Bauelementen, die gemäß dem erfindungsgemäßen Verfahren gefertigt worden sind, sind in den Figuren 8, 9, 10 und 11 in ihrer Gesamtheit mit 10 bezeichnet.

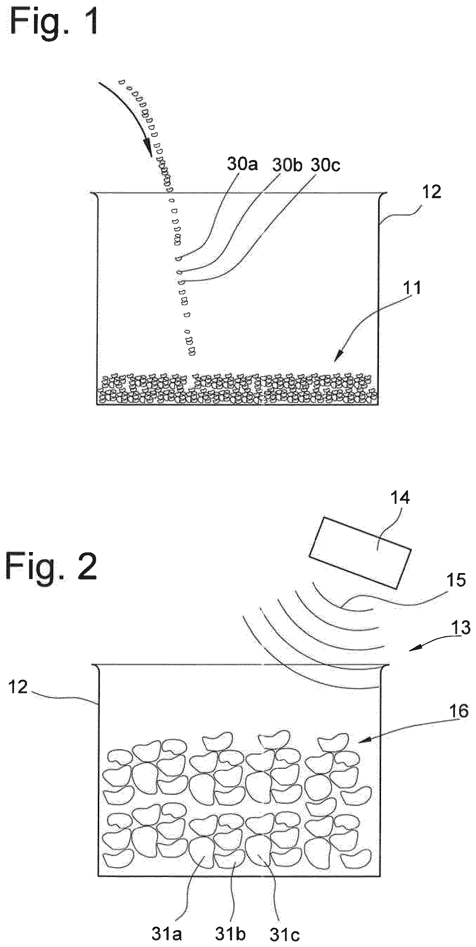

Im folgenden soll ausgehend von Fig. 1 das Verfahren zur Fertigung eines solchen Bauelementes 10 vorgestellt werden:
Ausweislich Fig. 1 ist ein Behältnis 12 dargestellt, in welches ein Granulat 11 eines Partikelschaumes eingefüllt wird. Die einzelnen Granulatpartikel, die beispielhaft mit den Bezugszeichen 30a, 30b, 30c bezeichnet sind, sind ungeschäumt, und stellen das Ausgangsmaterial zur Fertigung eines Partikelschaumes dar. Auf die einzelnen Materialien, die gemäß dem erfindungsgemäßen Verfahren verwendet werden können, wird später noch detailliert eingegangen.

Ausweislich Fig. 2 ist das Behältnis 12 Bestandteil eines Ofens 13, in dem die Granulatpartikel 30a, 30b, 30c teilweise aufgeschäumt werden können:
Hierzu ist eine Heizung 14, insbesondere eine Infrarotheizung 14, vorgesehen, die unter Verwendung von Infrarotstrahlen 15 (angedeutet) in den Ofen 13 eine vorherbestimmte Strahlungsleistung einbringt, um eine bestimmte Temperatur oder einen bestimmten Temperaturbereich zu erreichen. Die Granulatpartikel 30a, 30b, 30c werden in dem Ofen 13 der Temperatureinwirkung für eine vorherbestimmte Zeit ausgesetzt und schäumen teilweise auf. Man erkennt, dass die einzelnen Partikel 30a, 30b, 30c der Fig. 1 erheblich an Volumen gewinnen und gemäß Fig. 2 zu teilweise aufgeschäumten Partikeln 31a, 31b, 31c mutieren.

Angemerkt sei, dass die Figuren selbstverständlich nicht maßstäblich zu verstehen sind, sondern dass nur beispielhaft der Vorgang des Aufschäumens und die Volumenvergrößerungen dargestellt werden sollen.

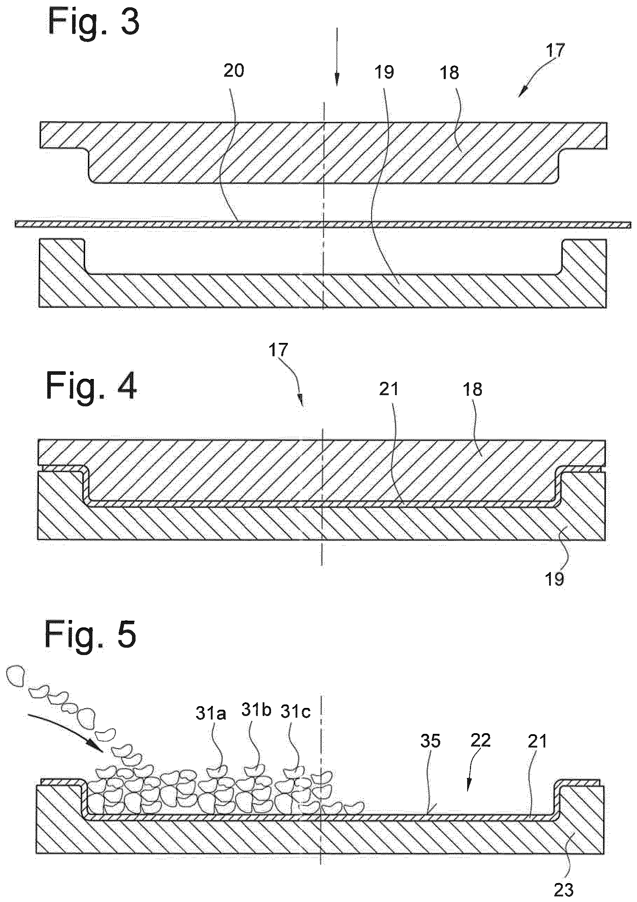

Die teilweise aufgeschäumten Partikel 31a, 31b, 31c sind noch immer lose, insbesondere nicht miteinander verbunden. Während des Prozesses des teilweisen Aufschäumens gemäß Fig. 2 kann durch zusätzliche Maßnahmen, wie beispielsweise Rütteln des Behältnisses 12, Rühren, Verwendung von Chemikalien, oder Einbringen von Chemikalien in das Behältnis 12 etc. erreicht werden, dass die Partikel 31a, 31b, 31c sich nicht miteinander verbinden oder sich nicht überwiegend miteinander verbinden, sondern noch als lose, schüttfähige oder zumindest gießfähige Masse transportierbar sind. Diese Masse wird ausweislich Fig. 5 in ein Unterwerkzeug 23 eines Werkzeuges 17b eingefüllt.

Zunächst soll anhand der Figuren 3 bis 4 die Herstellung des Substrates 21 erläutert werden:
Ausweislich Fig. 3 wird ein erstes Werkzeug 17 bereitgestellt, welches ein Oberwerkzeug 18 und ein Unterwerkzeug 19 umfasst. Die maßgeblichen Werkzeugteile können nach Art einer Matrize und nach Art einer Patrize ausgebildet sein. Man erkennt in Fig. 3 eine Folie 20 in flachliegendem, bahnförmigen Zustand, also einem Ausgangszustand. Fig. 3 zeigt das Werkzeug in geöffnetem Zustand.

Infolge eines Schließens des Werkzeuges wird die Folie 20 aus dem flachliegenden Zustand tiefgezogen. Durch den Tiefziehvorgang kann eine beliebige Raumkontur auf die Folie aufgebracht werden. Der Tiefziehvorgang kann - was in den Figuren nicht dargestellt ist - auf herkömmliche Weise durch Temperatur unterstützt werden. Für den Tiefziehvorgang kommen alternativ zu dem Präge-/Gesenkvorgang des Werkzeugs 17 der Fig. 3 auch Blasform-Verfahren oder andere Umform-Verfahren in Betracht, bei denen die Folie erwärmt wird, und durch Ansaugen in ihre endgültige Form verbracht wird.

Nach dem Öffnen des Werkzeugs 17 aus dem Zustand der Fig. 4 kann die tiefgezogene Folie 21 entnommen werden, und einem anderen Werkzeug zugeführt werden. Ein solches zweites Werkzeug 17b ist in den Figuren 5 bis 8 dargestellt.

Von der Erfindung ist auch umfasst, wenn die Folie 21 nach dem Tiefziehprozess in dem Unterwerkzeug 19 verbleibt, und lediglich das Oberwerkzeug ausgetauscht wird. Im Folgenden sei angenommen, dass ausgehend von Fig. 5, die tiefgezogene Folie 21 in ein anderes, zweites Unterwerkzeug 23 eines anderen Werkzeugs 17b verbracht wurde.

Ausweislich Fig. 5 wird in das Unterwerkzeug 23 in einen Unterbringungsraum 22, der zur Aufnahme der teilweise aufgeschäumten Partikel 31a, 31b, 31c, dient, und der der Rückseite 35 der tiefgezogenen Folie 21 zugewandt ist, die schüttbare oder gießbare Masse aus teilweise aufgeschäumten Partikel 31a, 31b, 31c verbracht. Ein Befüllen des zweiten Unterwerkzeugs 23 bzw. des dafür vorgesehenen Unterbringungsraumes 22, kann manuell oder maschinell oder maschinenunterstützt erfolgen, bis ein vorgegebenes Volumen oder eine vorgegebene Masse teilweise aufgeschäumter Partikel 31a, 31b, 31c in dem Unterbringungsraum 22 positioniert und insbesondere auch verteilt ist.

Hierbei kann eine in den Figuren nicht dargestellte Austragungs- oder Ausbringungsvorrichtung vorgesehen sein, die nach Art eines Zuführkopfes die Partikel entlang dem Unterbringungsraum 22 gleichmäßig verteilt.

Sodann wird das Werkzeug 17b geschlossen. Hierzu wird ein Oberwerkzeug 24 ausgehend von einem Zustand gemäß Fig. 6, in dem das Werkzeug 17b noch teilweise geöffnet ist, in einen Schließzustand verfahren. Der Unterbringungsraum 22 ist nun allseitig geschlossen.

Fig. 7 deutet eine Heizung 25, die das Werkzeug 17b, vorzugsweise sowohl Unterwerkzeug 23 als auch Oberwerkzeug 24, temperiert. Die Werkzeugtemperatur wird entsprechend der verwendeten Materialien für den Partikelschaum gewählt.

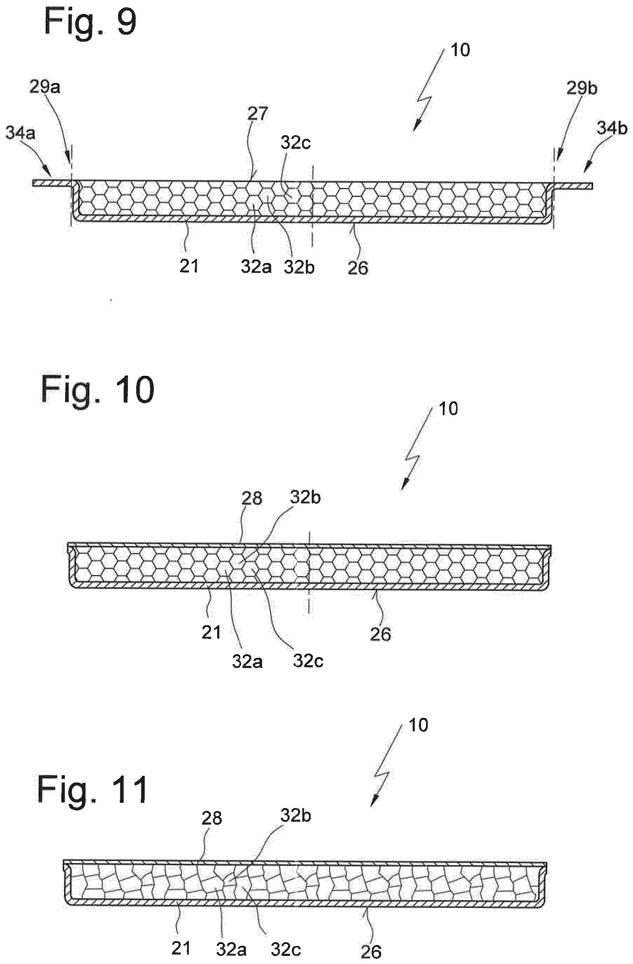

Infolge der Temperatureinwirkung werden die teilweise aufgeschäumten Partikel 31a, 31b, 31c vollständig aufgeschäumt. Man erkennt - lediglich beispielhaft angedeutet in Fig. 8 - eine Wabenstruktur. Dies ist ebenfalls nur schematisch zu verstehen: tatsächlich wird die Struktur des vollständig aufgeschäumten Partikelschaums unregelmäßig ausgebildet sein. Eine andere vergleichbare Struktur zeigt Fig. 11:
Hier ist anstelle der Rahmenstruktur der Fig. 8 eine unregelmäßige, polygonartige Struktur in der schematischen Schnittdarstellung gezeigt.

Fig. 8 macht deutlich, dass die teilweise aufgeschäumten Partikel 31a, 31b, 31c gemäß Fig. 7 zu vollständig aufgeschäumten Partikeln 32a, 32b, 32c mutieren, wobei zwischen einzelnen aufgeschäumten Partikeln 32a, 32b, 32c keine Freiräume mehr verbleiben. Fig. 7 deutet derartige Freiräume, beispielhaft bezeichnet mit 36, dagegen noch an.

Angemerkt sei, dass die Bezeichnung "vollständig aufgeschäumter Partikel 32a, 32b, 32c" irreführend ist:
Tatsächlich bildet die Vielzahl der vollständig aufgeschäumten Partikel 32a, 32b, 32c insgesamt eine vollständig aufgeschäumte Partikelschaummasse 33 oder einen vollständig aufgeschäumten Partikelschaum. Dieser kann ausweislich Fig. 8 auch innerhalb kurzer Zeit aushärten, so dass - wie Fig. 8 andeutet - das Werkzeug geöffnet, und das Oberwerkzeug 24 von dem Unterwerkzeug 23 abgehoben werden kann. Nun kann der so gebildete Formling 10 aus der Werkzeugform entnommen werden.

Infolge des Prozesses des End-Aufschäumens - bei geschlossenem Werkzeug - verbindet sich der Partikelschaum dauerhaft und fest mit der Innenseite 35 der tiefgezogenen Folie 21. Hierdurch wird ein leichtes, biegesteifes und tragfähiges und doch preiswert herstellbares Verbundbauteil bereitgestellt.

Ausweislich Fig. 9 könne bei Bedarf Überstandsbereiche 34a, 34b der Folie 21 entlang der Trennlinien 29a, 29b abgetrennt worden.

Das Ausführungsbeispiel der Fig. 10 zeigt die Rückseite 27 des Bauelementes 10, die mit einer zusätzlichen Schicht 28, z. B. aus Kunststoff, versehen werden kann.

Von der Erfindung sind auch Bauelemente umfasst, bei denen statt einer tiefgezogenen Folie 21 aus ABS oder PMMA eine dünne Folie aus Polyethylen oder Polypropylen, oder insbesondere auch sogenannte Slush-Häute, als Substrat 21 eingesetzt werden.

Die Seite 26 der tiefgezogenen Folie 21, die der ausgehärteten Partikelschaummasse 33 abgewandt ist, kann eine hochwertige Oberfläche ausbilden. Da für die Bereitstellung einer tiefgezogenen Folie 21 auf herkömmliche bekannte und erprobte Materialien zurückgegriffen werden kann, kann auf die entsprechenden Oberflächeneigenschaften der herkömmlichen Materialien zurückgegriffen werden.

Von der Erfindung ist auch umfasst, wenn die Oberfläche 26 des Substrats 21 einer gesonderten Bearbeitung unterzogen wird, um eine hochwertige Oberfläche bereitzustellen. So können beispielweise Bearbeitungsschritte wie Polieren, Lackieren, Bedampfen, Aufrauhen, Benetzen etc. in Betracht kommen.

In Fig. 8 sind beispielhaft die Wandstärken W1 der tiefgezogenen Folie 21 bzw. des Substrats und W2, nämlich die Wandstärke der ausgehärteten Partikelschaummasse 33 angedeutet. Die Wandstärke W1 kann zwischen 0,2 mm und 13 mm betragen, und die Wandstärke W2 zwischen 1 cm und 30 cm.

Von der Erfindung sind insbesondere Bauteile umfasst, die als Caravan-Wandelemente ausgebildet sind. Beispielsweise können Wandabschnitte eines Caravan-Anhängers oder eines Caravans, oder vollständige Wandelemente eines Caravans, im Fahrzeugbau verwendet werden, unter Einsatz des erfindungsgemäßen Verfahrens.

Von der Erfindung sind weiter Ausführungsformen umfasst, die vorsehen, dass vor Befüllen des Unterbringungsraums 22 mit teilweise aufgeschäumten Partikeln 31a, 31b, 31c Verstärkungselemente in dem Unterbringungsraum 22 untergebracht werden.

Die in den Figuren nicht dargestellten Verstärkungselemente können z. B. Verstärkungsfasern aufweisen. Infolge des Befüllens des Unterbringungsraums 22 mit teilweise aufgeschäumten Partikeln 31a, 31b, 31c werden die Partikel gleich verteilt und umhüllen die Verstärkungselemente mehrseitig, vorzugsweise allseitig. Das fertig hergestellte Bauelement 10 umfasst eine ausgehärtete Partikelschaummasse, die die Verstärkungselemente sicher umschließt. Durch Positionierung der Verstärkungselemente können so insbesondere Zugkräfte übertragen und abgefangen werden.

## Patentansprüche

1. Verfahren zur Herstellung eines flächenhaft ausgebildeten Bauelementes (10) in Sandwich-Leichtbauweise mit einer hochwertigen Oberfläche (26), umfassend die folgenden Schritte:
a) Bereitstellen eines folienartigen Substrates (21)
b) Anordnen des Substrates (21) in einem Unterwerkzeug (23) eines Werkzeugs (17b),
c) Bereitstellen von granularem Ausgangsmaterial in Form von losen Partikeln (30a, 30b, 30c) eines aufschäumbaren Partikelschaumes, wie EPS, EPE oder PEEK,
d) teilweises Aufschäumen der Partikel (30a, 30b, 30c), insbesondere in einem Infrarot-Backofen,
e) Verbringen der teilweise aufgeschäumten Partikel (31a, 31b, 31c) in das Unterwerkzeug (23), und Anordnen der teilweise aufgeschäumten Partikel (31a, 31b, 31c) in einen Unterbringungsraum (22) in dem Unterwerkzeug (23),
f) Schließen des Werkzeuges (17b),
g) Heizen des Werkzeuges (17b),
h) Endaufschäumen der teilweise aufgeschäumten Partikel (31a, 31b, 31c) zu einem vollständig aufgeschäumten Partikelschaum (33), wobei sich der Partikelschaum mit dem Substrat verbindet,
i) Aushärtenlassen des Partikelschaums (33),
j) insbesondere Öffnen des Werkzeuges (17b) und Entnehmen des so gebildeten Formlings (10).

2. Verfahren nach Anspruch 1, **dadurch gekennzeichnet, dass** das Substrat von einer tiefgezogenen Folie (21) bereitgestellt ist.

3. Verfahren nach Anspruch 1 oder 2, **gekennzeichnet durch** den Schritt:
k) Anbringen einer Deckschicht (28) an der dem Substrat (21) abgewandten Seite (27) des Partikelschaums (33).

4. Verfahren nach einem der vorangegangenen Ansprüche, **gekennzeichnet durch** den Schritt:
I) Bearbeiten des Formlings zu einem Bauelement (10).

5. Verfahren nach Anspruch 2, **dadurch gekennzeichnet, dass** die Folie (21) eine Wandstärke (W1) zwischen 0,2 mm und 13 mm aufweist.

6. Verfahren nach einem der vorangegangenen Ansprüche, **dadurch gekennzeichnet, dass** der ausgehärtete Partikelschaum (33) eine Wandstärke (W2) zwischen 1 cm und 30 cm aufweist.

7. Verfahren nach einem der vorangegangenen Ansprüche, **dadurch gekennzeichnet, dass** das Bauelement (10) als Fahrzeugteil für ein Kfz oder für ein Nutzfahrzeug oder für ein Caravan-Fahrzeug, wie Innenausstattungsteil, Laderaumabdeckung, Verkleidungsteil, Motorhaube, Dachelement oder Dachsegment, Fahrzeugwand, oder Fahrzeug-Wandelement, ausgebildet ist.

8. Verfahren nach einem der vorangegangenen Ansprüche, **dadurch gekennzeichnet, dass** das Ausgangsmaterial von expandierbarem EPS, PP, oder PEEK bereitgestellt ist.

9. Verfahren nach einem der vorangegangenen Ansprüche, **dadurch gekennzeichnet, dass** vor Durchführung des Schrittes h) der folgende Schritt durchgeführt wird:
m) Positionieren von Verstärkungselementen, insbesondere nach Art von Zugankern, beispielsweise nach Art von Tapes, in dem Unterwerkzeug, wobei nach dem Verbringen der teilweise aufgeschäumten Partikel (31a, 31b, 31c) in das Unterwerkzeug (23) diese die Verstärkungselemente umhüllen.

10. Flächenhaft ausgebildetes Bauelement (10) mit einer hochwertigen Oberfläche (26), hergestellt nach einem der vorangegangenen Ansprüche, umfassend ein Substrat (21), insbesondere eine tiefgezogene Folie, mit der ein ausgehärteter Partikelschaum (33) verbunden ist.

11. Bauelement nach Anspruch 10, **dadurch gekennzeichnet, dass** die Folie (21) eine Wandstärke (W1) zwischen 0,2 mm und 13 mm aufweist.

12. Bauelement nach Anspruch 10 oder 11, **dadurch gekennzeichnet, dass** der ausgehärtete Partikelschaum (33) eine Wandstärke (W2) zwischen 1 und 30 cm aufweist.

13. Bauelement nach einem der Ansprüche 10 bis 12, **dadurch gekennzeichnet, dass** der Partikelschaum (33) gegen das Substrat (21) geschäumt ist.

## Claims

1. Method for producing a planar component (10) in a sandwich lightweight construction having a high-quality surface (26), comprising the following steps:
a) providing a foil-like substrate (21),
b) arranging the substrate (21) in a lower die (23) of a die (17b),
c) providing granular starting material in the form of loose particles (30a, 30b, 30c) of an expandable particle foam, such as EPS, EPE or PEEK,
d) partially expanding the particles (30a, 30b, 30c), in particular in an infrared oven,
e) introducing the partially expanded particles (31a, 31b, 31c) into the lower die (23), and arranging the partially expanded particles (31a, 31b, 31c) in an accommodation chamber (22) in the lower die (23),
f) closing the die (17b),
g) heating the die (17b),
h) final expanding of the partially expanded particles (31a, 31b, 31c) to form a completely expanded particle foam (33), wherein the particle foam binds to the substrate,
i) allowing the particle foam (33) to cure,
j) in particular opening the die (17b) and removing the thus formed moulded article (10).

2. Method according to claim 1, **characterised in that** the substrate is provided by a deep-drawn foil (21).

3. Method according to claim 1 or 2, **characterised by** the step:applying a cover layer (28) to the side (27) of the particle foam (33) facing away from the substrate (21).

4. Method according to one of the preceding claims, **characterised by** the step:
I) working the moulded article to a form a component (10).

5. Method according to claim 2, **characterised in that** the foil (21) has a wall thickness (W1) between 0.2 mm and 13 mm.

6. Method according to one of the preceding claims, **characterised in that** the cured particle foam (33) has a wall thickness (W2) between 1 cm and 30 cm.

7. Method according to one of the preceding claims, **characterised in that** the component (10) is designed as a vehicle part for a motor vehicle or for a commercial vehicle or for a caravan vehicle, such as an interior fitting part, cargo compartment cover, panel part, bonnet, roof element or roof segment, vehicle wall or vehicle wall element.

8. Method according to one of the preceding claims, **characterised in that** the starting material of expandable EPS, PP or PEEK is provided.

9. Method according to one of the preceding claims, **characterised in that** before carrying out step h), the following step is carried out:
m) positioning reinforcement elements, in particular in the form of tension rods, for example in the form of tapes, in the lower die, wherein the particles envelop the reinforcement elements after the partially expanded particles (31a, 31b, 31c) have been introduced into the lower die (23).

10. Planar component (10), having a high-quality surface (26), produced according to one of the preceding claims, comprising a substrate (21), in particular a deep-drawn foil, to which a cured particle foam (33) is bonded.

11. Component according to claim 10, **characterised in that** the foil (21) has a wall thickness (W1) between 0.2 mm and 13 mm.

12. Component according to claim 10 or 11, **characterised in that** the cured particle foam (33) has a wall thickness (W2) between 1 and 30 cm.

13. Component according to one of claims 10 to 12, **characterised in that** the particle foam (33) is expanded against the substrate (21).

## Revendications

1. Procédé de fabrication d'un composant de construction (10) de forme plane, de type sandwich léger, avec une surface (26) de haute qualité, comprenant les étapes suivantes consistant à :
a) fournir un substrat (21) en forme de feuille,
b) disposer le substrat (21) dans un contre-moule (23) d'un moule (17b),
c) fournir un matériau de départ granulaire sous forme de particules en vrac (30a, 30b, 30c) d'une mousse de particules expansible, telle que EPS, EPE ou PEEK,
d) faire mousser partiellement les particules (30a, 30b, 30c), en particulier dans un four à infrarouge,
e) transférer les particules partiellement expansées (31a, 31b, 31c) dans le contre-moule (23) et disposer les particules partiellement expansées (31a, 31b, 31c) dans un espace de logement (22) dans le contre-moule (23),
f) fermer le moule (17b),
g) chauffer le moule (17b),
h) faire le moussage final des particules partiellement moussées (31a, 31b, 31c) pour obtenir une mousse de particules entièrement moussée (33), la mousse de particules se liant au substrat,
i) laisser durcir la mousse de particules (33),
j) en particulier, ouvrir le moule (17b) et retirer la pièce moulée (10) ainsi formée.

2. Procédé selon la revendication 1, **caractérisé en ce que** le substrat est fourni par une feuille emboutie (21).

3. Procédé selon la revendication 1 ou 2, **caractérisé par** l'étape consistant à :
k) appliquer une couche de recouvrement (28) sur le côté (27) de la mousse particulaire (33) opposé au substrat (21).

4. Procédé selon l'une des revendications précédentes, **caractérisé par** l'étape consistant à :
l) usiner la pièce moulée pour obtenir un composant de construction (10).

5. Procédé selon la revendication 2, **caractérisé en ce que** la feuille (21) présente une épaisseur de paroi (W1) comprise entre 0,2 mm et 13 mm.

6. Procédé selon l'une des revendications précédentes, **caractérisé en ce que** la mousse de particules durcie (33) présente une épaisseur de paroi (W2) comprise entre 1 cm et 30 cm.

7. Procédé selon l'une des revendications précédentes, **caractérisé en ce que** le composant de construction (10) est conçu comme une pièce de véhicule pour une voiture particulière ou un véhicule utilitaire ou une caravane, telle qu'une pièce d'aménagement intérieur, un couvre-coffre, un élément d'habillage, un capot moteur, un élément de toit ou un segment de toit, une paroi de véhicule ou un élément de paroi de véhicule.

8. Procédé selon l'une des revendications précédentes, **caractérisé en ce que** le matériau de départ est fourni sous forme d'EPS, de PP ou de PEEK expansible.

9. Procédé selon l'une des revendications précédentes, **caractérisé en ce que**, avant l'exécution de l'étape h), est effectuée l'étape suivante consistant à :
m) positionner des éléments de renfort, en particulier du type tirants, par exemple du type bandes, dans le contre-moule, les particules partiellement expansées (31a, 31b, 31c) enveloppant les éléments de renfort après avoir été introduites dans le contre-moule (23).

10. Composant de construction (10) de forme plane avec une surface de haute qualité (26), fabriqué selon l'une des revendications précédentes, comprenant un substrat (21), en particulier une feuille emboutie, auquel est liée une mousse de particules durcie (33).

11. Composant selon la revendication 10, **caractérisé en ce que** la feuille (21) présente une épaisseur de paroi (W1) comprise entre 0,2 mm et 13 mm.

12. Composant selon la revendication 10 ou 11, **caractérisé en ce que** la mousse de particules durcie (33) présente une épaisseur de paroi (W2) comprise entre 1 et 30 cm.

13. Composant selon l'une des revendications 10 à 12, **caractérisé en ce que** la mousse particulaire (33) est moussée contre le substrat (21).
